# EUROPEAN PATENT APPLICATION

(11) **EP 4 807 601 A1**
(43) Date of publication of application: **16.09.2026**
(21) Application number: 25163040.6
(22) Date of filing: 11.03.2025
(51) Int. Cl.: G06F 21/57, G06F 21/64, H04L 9/40

(54) **VERIFYING THE INTEGRITY OF NON-STATIC COMPUTING SYSTEMS**

(71) Applicant: ABB SCHWEIZ AG, 5400 Baden (CH)
(72) Inventor: KOHNHAEUSER, Florian, 64560 Riedstadt (DE); FINSTER, Soeren, 76131 Karlsruhe (DE); COPPIK, Nicolas, 68165 Mannheim (DE); GOETTEL, Christian, 5442 Fislisbach (CH)
(74) Representative: Maiwald GmbH

(57) **Abstract**

A method (100) for verifying, by a first computing system (1), the integrity of a second computing system (2), the method (100) comprising the steps of:
• receiving (110), by the first computing system (1), from the second computing system (2), one or more compressed digests (3a, 4a) of one or more software components (3) and/or configuration components (4);
• comparing (120), by the first computing system (1), each digest (3a, 4a) to a known-good value (5);
• in response to the digest (3a, 4a) matching the known-good value (5), determining (130), by the first computing system (1), that the respective software component (3) and/or configuration component (4) is of integrity; whereas,
• in response to the digest (3a, 4a) not matching the known-good value (5),
∘ obtaining (140), by the first computing system (1), the respective software component (3) and/or configuration component (4) from the second computing system (2);
∘ analyzing (150) the obtained software component (3) and/or configuration component (4); and
∘ determining (160) whether the obtained software component (3) and/or configuration component (4) is of integrity based at least in part on the outcome (150a) of this analysis.

## Description

### FIELD OF THE INVENTION

The invention relates to computer security, and in particular to verifying whether a remote computing system is of integrity or whether its software and/or configuration has been tampered with.

### BACKGROUND

When computing systems communicate over a network, one aspect of security is to know that a remote computing system is actually who it purports to be. Another aspect is that this remote computing system has not been taken over by an attacker. By such a takeover, an attacker could sail under the "false flag" of the remote computing system and exploit the trust that is placed in this remote computing system. For example, other computing systems could divulge sensitive information to the remote computing system, or the remote computing system might have permissions to issue control commands to industrial assets.

To determine whether the remote computing system is still of integrity or whether it has been tampered with, an attestation procedure is frequently used. To this end, the remote computing system computes hash values over important components, such as software or configuration components. These hash values are compared to known-good values. If the hash values match the known-good values, the remote computing system is deemed to be of integrity.

If changes are made to the software or configuration components, the known-good values need to be updated. In a large fleet of computing systems where changes to software and/or configuration components are frequent, this causes a lot of manual work.

### OBJECTIVE OF THE INVENTION

It is therefore an objective of the invention to reduce the need for manual verification and updates of known-good values in a setting where the integrity of a remote computing system needs to be verified even though the software and/or configuration of this remote computing system is undergoing authorized changes.

This objective is achieved by a method according to the independent claim. Further advantageous embodiments are detailed in the dependent claims.

### DISCLOSURE OF THE INVENTION

The invention provides a method for verifying, by a first computing system, the integrity of a second computing system. For example, the first computing system and the second computing system may communicate over a network, such as LAN or WAN.

In the course of the method, the first computing system receives one or more compressed digests of one or more software components and/or configuration components from the second computing system. A compressed digest comprises less information than the input and is therefore usually computed from the input by means of a "one-way function", that is, it is not possible to reconstruct the input from the compressed digest. A prime example of a compressed digest is a hash function that maps an input of an arbitrary size to a hash value of a fixed size. In particular, the hash function may be cryptographically secure in the sense that even a minimal change to the input will cause a drastic change in the hash value, and that it is not feasible to find, given a first input and a hash value of this input, a second input that produces the same hash value ("collision"). Optionally, the computation of the compressed digest may involve a secret key that is known to the second computing system and may, in particular, protected by hardware. For example, the second computing system may employ a keyed hash function, and/or a hash value may be cryptographically signed using the secret key.

The first computing system compares each digest to a known-good value. If the digest for a particular software component and/or configuration component matches the respective known-good value, it may be determined that this software component and/or configuration component is of integrity, i.e., has not been tampered with. In particular, in response to determining that all checked software components and/or configuration components are of integrity, it may be determined that the second computing system as a whole is of integrity.

If the digest for a software component and/or configuration component does not match the known-good value, the first computing system obtains the respective software component and/or configuration component from the second computing system. In particular, the first computing system may request the software component and/or configuration component from the second computing system, and the second computing system may fulfil this request by transmitting the software component and/or configuration component to the first computing system.

The obtained software component and/or configuration component is then analyzed. This may be done by the first computing system, but this is not required. Rather, the analysis may, for example, be offloaded to an external system, such as a cloud system. Based at least in part on the outcome of this analysis, it is determined whether the obtained software component and/or configuration component is of integrity.

The inventors have found that, in very many cases where there are changes, only one or at most a few software components and/or configuration components have changed. That is, almost all software components and/or configuration components can be cleared immediately by virtue of their compressed digests matching the respective known-good values. In the software components and/or configuration components that have changed, there are typically only few changes. It pays to analyze these few changes in more detail and spend some effort on this analysis in order to determine, in an automated manner, whether the changes are acceptable and the respective software component and/or configuration component may be deemed to be of integrity despite the changes.

In a particularly advantageous embodiment, in the course of analyzing the software component and/or configuration component obtained from the second computing system, the first computing system computes a compressed digest of the obtained software component and/or configuration component. This compressed digest is compared to the compressed digest of the nominally same software component and/or configuration component received from the second computing system. If the newly computed compressed digest does not match the compressed digest originally obtained from the second computing system, it is determined that the obtained software component and/or configuration component is not of integrity. In this manner, it is ensured that, when the changed software component and/or configuration component is obtained from the second computing system, a request to this effect cannot be misused as an opportunity to hide unacceptable changes by submitting, to the first computing system, a newly created version of the software component and/or configuration component that has been deliberately crafted to contain only acceptable changes.

In a further particularly advantageous embodiment, in the course of analyzing a software component and/or configuration component that has been changed and therefore obtained form the second computing system, the obtained software component and/or configuration component to a known-good state of this software component and/or configuration component. This may be done by the first computing system, but also by any other computing system, e.g., by a cloud system to which the analysis has been offloaded. Based on one or more predetermined criteria, it is then determined whether the changes identified during the comparing are permissible. In response to determining that the changes are permissible, t is determined that the obtained software component and/or configuration component is of integrity. In this manner, if there is any pre-existing knowledge about which changes are acceptable, this pre-existing knowledge may be put to use.

In one particularly advantageous embodiment, in response to determining that the obtained software component has changed due to an authorized software update, the change of the software component is determined to be permissible. Software updates are usually rolled out in a manner that is orchestrated by some central management. Therefore, it is known whether a change of a software component at a certain point in time is due to an authorized software update. Alternatively or in combination to checking the point in time at which the change was made, a cryptographic signature of the software component may be verified. If the software component has been signed by the publisher of the software, or another authorized entity, it may be determined to be an authorized update.

In a further particularly advantageous embodiment, in response to determining that a configuration component has changed at most in authorized places, and/or to authorized states and/or values, the change of the configuration component is determined to be permissible. In many use cases, it is known in advance that, for example, some fields in configuration files will be changed in the course of normal operation. Also, some changes have a lesser potential for causing harm in the concrete application of the second computing system than others. For example, in a distributed control system, DCS, of an industrial plant, changing the file name of a human-readable log file will not have an immediate impact on the functioning of the DCS. But changing the set-point value for a low-level controller may have a large impact on an industrial process that is executed on the industrial plant.

Thus, in a further particularly advantageous embodiment, the authorized places, states and/or values comprise
- at least one path name of a file or directory referenced in the configuration component (e.g., a configuration file), and/or
- at least one address of a remote computing system and/or remote network referenced in the configuration component.

Compared with other values in the configuration components, these pieces of information are known to change relatively frequently. For example, computing systems may be reorganized in a network and/or in an industrial plant. For example, if the computing systems comprises embedded systems in process modules for modular process plants, re-assembly of the process modules to a new plant configuration in a Lego manner may trigger changes to addresses and path names.

In a further particularly advantageous embodiment, at least one authorized state and/or value for a change in a configuration component is specified as a range. In this manner, changes that are likely to be beneficial to the application at hand may be approved, whereas changes that are likely to be malicious or nonsensical may be declined. For example, network addresses referenced in the configuration file may be restricted to an address range that corresponds to the local network of the industrial plant, and/or to a larger network controlled by the plant owner. Parameters with which to control industrial assets may be restricted to specifications and/or ratings of the respective assets, and/or to limits imposed by the industrial process that is being executed.

In a further particularly advantageous embodiment, at least one criterion whether changes are permissible is dependent on:
- a point in time at which a change was made, and/or on a time interval between successive changes, and/or
- whether the changes follow a trend of past changes, and/or
- a consistency of the changes with other, permissible changes, and/or
- a potential impact of the changes on the physical well-being of at least one industrial asset.

These criteria offer further good possibilities to utilize pre-existing knowledge about permissible changes. In particular, if its is monitored whether changes follow a trend of past changes, the method may self-learn which changes are to be considered normal. Also, considering the impact on the physical well-being may be done relatively easily based on known specifications and/or ratings of the industrial asset, and allows to identify changes that are deliberately crafted to damage industrial assets in a manner akin to the Stuxnet computer worm.

In a further particularly advantageous embodiment, in the course of determining whether the obtained software component and/or configuration component is of integrity, multiple analysis results of multiple aspects of the obtained software component and/or configuration component are aggregated into a score value. Based at least in part on this score value, it is then determined whether the obtained software component and/or configuration component is of integrity. In this manner, better use can be made of criteria that are only "weak learners" on their own. This is in some way analogous to spam filtering or credit scoring that also combine a plethora of "weak learners" into a score.

In a further particularly advantageous embodiment, in the course of analyzing the obtained software component and/or configuration component, the software component and/or configuration component is uploaded to a digital twin of the second computing system in a simulation environment. The behaviour of this digital twin in the simulation environment is then analyzed. In this manner, effects of changes that are dependent on complex interactions with other software components and/or configuration components, and/or that only occur under certain additional conditions, may be considered as well.

In a further particularly advantageous embodiment, the analyzing of the obtained software component and/or configuration component comprises:
- a malware scan and/or a behavioural analysis of the obtained software component, and/or
- a scan of the obtained configuration component for the presence of one or more misconfigurations out of a known set of misconfigurations; and/or
- a rating of the obtained software component and/or configuration component by at least one trained machine learning model.

In particular, a malware scan and/or behavioural analysis may reveal intentionally harmful modifications of software components. A scan for misconfigurations reveals modifications that are likely not harmful but may nonetheless have a negative impact on the operation of the second computing system. A machine learning model may, for example, perform a binary classification as to whether the software component and/or configuration component is usable or not, and/or it may determine a score as to the usability, and/or a classification as to the kind of issues that are still outstanding.

It may not be possible in each and every case to determine in an automated manner whether a change to a software component and/or configuration component is permissible. Therefore, in a further particularly advantageous embodiment, in the course of determining whether the obtained software component and/or configuration component is of integrity, one or more results of the analysis of the obtained software component and/or configuration component are provided to a human expert. The human expert is then prompted for a rating that is indicative of whether the obtained software component and/or configuration component is of integrity.

Previously, whenever the compressed digest of a software component and/or configuration component did not match a known-good value, the second computing system could not be verified to be of integrity. The extensive possibilities explained above for determining in an automated manner whether changes to software components and/or configuration components are acceptable relieve the human expert of much routine work. That is, the human expert resources can be concentrated on those cases where it is really doubtful whether changes are acceptable. Every hour of the human expert that may be saved and diverted to more important work counts.

In a further particularly advantageous embodiment, in response to determining that the obtained software component and/or configuration component is of integrity, the compressed digest of this software component and/or configuration component received from the second computing system is stored as a new known-good value. In this manner, the newly gained knowledge that the new state of the software component and/or configuration component is acceptable is made permanent. The new known-good value may take the place of the previous known-good value, but it may also be stored in addition to the previous known-good value, so that a return of the software component and/or configuration component to the previous state is possible.

Because it may be fully or at least partially computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for verifying the integrity of a second computing system 2;
Figure 2: Exemplary communication flow between a first computing system 1 and a second computing system 2 while verifying the integrity of the second computing system 2 using the method 100.

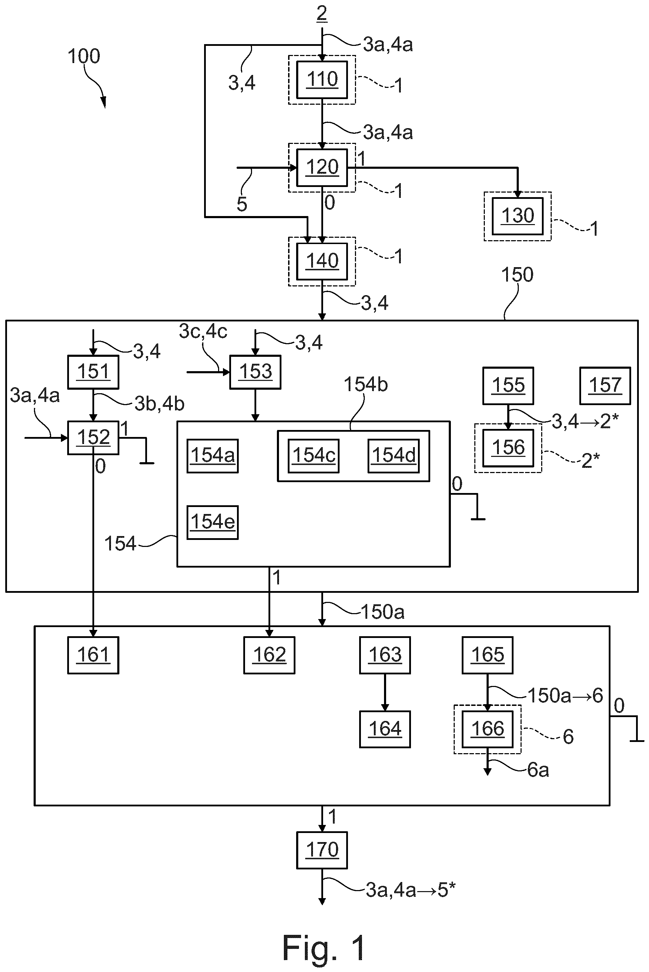

Figure 1 is a schematic flow chart of an embodiment of the method 100 for verifying, by a first computing system 1, the integrity of a second computing system 2.

In step 110, the first computing system 1 receives one or more compressed digests 3a, 4a of one or more software components 3 and/or configuration components 4 from the second computing system 2.

In step 120, the first computing system 1 compares each digest 3a, 4a to a known-good value 5 for the respective software component 3 and/or configuration component 4.

If the digest 3a, 4a matches the known value (truth value 1 in step 120), then, in step 130, the first computing system 1 determines the respective software component 3 and/or configuration component 4 is of integrity.

If the digest 3a, 4a does not match the known-good value (truth value 0 in step 120), then, in step 140, the first computing system 1 obtains the respective software component 3 and/or configuration component 4 from the second computing system 2. In step 150, the so-obtained software component 3 and/or configuration component 4 is then analyzed. Based at least in part on the outcome 150a of this analysis, in step 160, it is determined whether the obtained software component 3 and/or configuration component 4 is of integrity.

According to block 151, the first computing system 1 may compute a compressed digest 3b, 4b of the obtained software component 3 and/or configuration component 4. According to block 152, this compressed digest 3b, 4b may then be compared to the compressed digest 3a, 4a of the nominally same software component 3 and/or configuration component 4 received from the second computing system 2. If the newly computed compressed digest 3b, 4b does not match the originally received compressed digest 3a, 3a (truth value 0 at block 152), according to block 161, t may be determined that the obtained software component 3 and/or configuration component 4 is not of integrity.

According to block 153, the obtained software component 3 and/or configuration component 4 may be compared to a known-good state 3c, 4c of this software component 3 and/or configuration component 4. According to block 154, it may then be determined, based on one or more predetermined criteria, whether the changes identified during the comparing are permissible. In response to determining that the changes are permissible (truth value 1 at block 154), it may then be determined, according to block 162, that the obtained software component (3) and/or configuration component (4) is of integrity.

In particular, according to block 154a, in response to determining that the obtained software component 3 has changed due to an authorized software update, the change of the software component 3 may be determined to be permissible.

According to block 154b, in response to determining that a configuration component 4 has changed at most in authorized places, and/or to authorized states and/or values, the change of the configuration component 4 may be determined to be permissible.

In particular, according to block 154c, the authorized places, states and/or values may comprise
- at least one path name of a file or directory referenced in the configuration component 4, and/or
- at least one address of a remote computing system and/or remote network referenced in the configuration component 4.

Alternatively or in combination to this, according to block 154d, at least one authorized state and/or value may be specified as a range.

According to block 154e, at least one criterion whether changes are permissible may be dependent on:
- a point in time at which a change was made, and/or on a time interval between successive changes, and/or
- whether the changes follow a trend of past changes, and/or
- a consistency of the changes with other, permissible changes, and/or
- a potential impact of the changes on the physical well-being of at least one industrial asset.

According to block 155, the software component 3 and/or configuration component 4 may be uploaded to a digital twin 2* of the second computing system 2 in a simulation environment. According to block 156, the behaviour of this digital twin 2* in the simulation environment may then be analyzed.

According to block 157, the analyzing 150 of the obtained software component 3 and/or configuration component 4 may comprise
- a malware scan and/or a behavioural analysis of the obtained software component 3, and/or
- a scan of the obtained configuration component 4 for the presence of one or more misconfigurations out of a known set of misconfigurations; and/or
- a rating of the obtained software component 3 and/or configuration component 4 by at least one trained machine learning model.

According to block 163, multiple analysis results of multiple aspects of the obtained software component 3 and/or configuration component 4 may be aggregated into a score value. According to block 164, based at least in part on this score, it may then be determined whether the obtained software component 3 and/or configuration component 4 is of integrity based at least in part on this score value.

According to block 165, one or more results 150a of the analysis 150 of the obtained software component 3 and/or configuration component 4 may be provided to a human expert 6. According to block 166, the human expert 6 may then be prompted for a rating 6a that is indicative of whether the obtained software component 3 and/or configuration component 4 is of integrity.

In the example shown in Figure 1, if step 160 reveals that the obtained software component 3 and/or configuration component 4 is of integrity, in step 170, the compressed digest 3a, 4a of this software component 3 and/or configuration component 4 received from the second computing system 2 is stored as a new known-good value 5*.

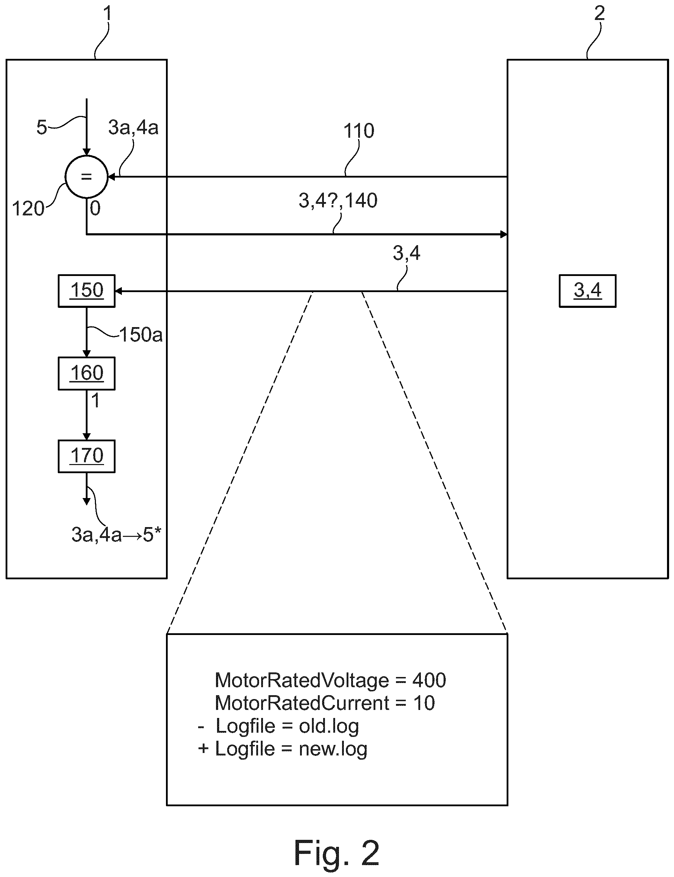

Figure 2 illustrates the flow of communication between a first computing system 1 and a second computing system 2 while an exemplary embodiment of the method 100 is performed to verify the integrity of the second computing system 2.

In step 110 of the method 100, the second computing system 2 sends a compressed digest 3a, 4a of a to-be-checked software component 3 and/or configuration component 4 to the first computing system 1. In step 120, the first computing system 1 compares this compressed digest 3a, 4a to a known-good value 5. In the example shown in Figure 2, the outcome of this comparison is that the compressed digest 3a, 4a does not match the known-good value 5 (truth value 0).

In response to this, in step 140, the first computing system 1 requests the software component 3 and/or configuration component 4 from the second computing system 2. The second computing system 2 fulfills the request and sends the software component 3 and/or configuration component 4 to the first computing system 1. The first computing system 1 then analyzes the software component 3 and/or configuration component 4 in step 150, and based on the outcome of this analysis, determines in step 160 whether the software component 3 and/or configuration component 4 is of integrity.

In the example shown in Figure 2, the configuration component 4 comprises
- a configuration of a rated voltage for a motor to 400 volts,
- a configuration of a rated current of the motor to 10 amps, and
- a path name of a log file to which log events are to be written.

The change that causes a mis-match between the compressed digest 4a of the configuration component 4 and the known-good value 5 is a change of the path name of the log file from "old.log" to "new.log". In the example shown in Figure 2, this change is deemed to be acceptable. Therefore, the outcome of step 160 is that the configuration component 4 is of integrity. The corresponding new compressed digest 4a is therefore stored as a new known good value 5* in step 170.

### List of reference signs:

- 1: first computing system
- 2: second computing system
- 2*: digital twin of second computing system 2
- 3: software component of second computing system 2
- 3a: compressed digest (hash) of software component 3
- 3b: compressed digest (hash), newly computed by first computing system 1
- 3c: known-good state of software component 3
- 4: configuration component of second computing system 2
- 3a: compressed digest (hash) of configuration component 4
- 3b: compressed digest (hash), newly computed by first computing system 1
- 3c: known-good state of configuration component 4
- 5: known-good value of compressed digest 3a, 4a
- 5*: new known-good value of compressed digest 3a, 4a
- 6: human expert
- 6a: rating by human expert
- 100: method for verifying the integrity of the second computing system 2
- 110: receiving compressed digests 3a, 4a
- 120: comparing digest 3a, 4a to known-good value 5
- 130: determining that software/configuration component 3, 4 is of integrity
- 140: obtaining software/configuration component 3, 4 from computing system 2
- 150: analyzing obtained software/configuration component 3, 4
- 150a: outcome of analysis 150
- 151: computing new compressed digest 3b, 4b
- 152: comparing new digest 3b, 4b to originally received digest 3a, 4a
- 153: comparing software/configuration component 3, 4 to known-good state 3c, 4c
- 154: identifying whether changes are permissible
- 154a: determining that authorized software update is permissible
- 154b: determining that special limited changes are permissible
- 154c: special choice of authorized places, states or values
- 154d: specifying authorized places, states or values as ranges
- 154e: further special criteria for permissible changes
- 155: uploading software/configuration component 3, 4 to digital twin 2*
- 156: analyzing behaviour of digital twin 2*
- 157: special components of analysis 150
- 160: determining integrity based on outcome 150a of analysis 150
- 161: determining missing integrity due to non-matching digests 3b, 4b; 3a, 4a
- 162: determining integrity due to only authorized changes
- 163: aggregating multiple analysis results 150a to score value
- 164: determining integrity based on score value
- 165: providing analysis results 150a to human expert 6
- 166: prompting human expert 6 for rating 6a
- 170: storing digest 3a, 4a as new known-good value 5*

## Claims

1. A method (100) for verifying, by a first computing system (1), the integrity of a second computing system (2), the method (100) comprising the steps of:
• receiving (110), by the first computing system (1), from the second computing system (2), one or more compressed digests (3a, 4a) of one or more software components (3) and/or configuration components (4);
• comparing (120), by the first computing system (1), each digest (3a, 4a) to a known-good value (5);
• in response to the digest (3a, 4a) matching the known-good value (5), determining (130), by the first computing system (1), that the respective software component (3) and/or configuration component (4) is of integrity; whereas,
• in response to the digest (3a, 4a) not matching the known-good value (5),
∘ obtaining (140), by the first computing system (1), the respective software component (3) and/or configuration component (4) from the second computing system (2);
∘ analyzing (150) the obtained software component (3) and/or configuration component (4); and
∘ determining (160) whether the obtained software component (3) and/or configuration component (4) is of integrity based at least in part on the outcome (150a) of this analysis.

2. The method (100) of claim 1, wherein the analyzing (150) of the obtained software component (3) and/of configuration component (4) comprises:
• computing (151), by the first computing system (1), a compressed digest (3b, 4b) of the obtained software component (3) and/or configuration component (4);
• comparing (152) this compressed digest (3b, 4b) to the compressed digest (3a, 4a) of the nominally same software component (3) and/or configuration component (4) received from the second computing system (2); and
• in response to determining that the compressed digests (3b, 4b; 3a, 4a) do not match, determining (161) that the obtained software component (3) and/or configuration component (4) is not of integrity.

3. The method (100) of any one of claims 1 to 2, wherein the analyzing (150) of the obtained software component (3) and/or configuration component (4) comprises:
• comparing (153) the obtained software component (3) and/or configuration component (4) to a known-good state (3c, 4c) of this software component (3) and/or configuration component (4);
• determining (154), based on one or more predetermined criteria, whether the changes identified during the comparing are permissible; and
• in response to determining that the changes are permissible, determining (162) that the obtained software component (3) and/or configuration component (4) is of integrity.

4. The method (100) of claim 3, wherein, in response to determining (154a) that the obtained software component (3) has changed due to an authorized software update, the change of the software component (3) is determined to be permissible.

5. The method (100) of any one of claims 3 to 4, wherein, in response to determining (154b) that a configuration component (4) has changed at most in authorized places, and/or to authorized states and/or values, the change of the configuration component (4) is determined to be permissible.

6. The method (100) of claim 5, wherein the authorized places, states and/or values comprise (154c)
• at least one path name of a file or directory referenced in the configuration component (4), and/or
• at least one address of a remote computing system and/or remote network referenced in the configuration component (4).

7. The method (100) of any one of claims 5 to 6, wherein at least one authorized state and/or value is specified (154d) as a range.

8. The method (100) of any one of claims 3 to 7, wherein at least one criterion whether changes are permissible is dependent (154e) on:
• a point in time at which a change was made, and/or on a time interval between successive changes, and/or
• whether the changes follow a trend of past changes, and/or
• a consistency of the changes with other, permissible changes, and/or
• a potential impact of the changes on the physical well-being of at least one industrial asset.

9. The method (100) of any one of claims 1 to 8, wherein the determining whether the obtained software component (3) and/or configuration component (4) is of integrity comprises:
• aggregating (163) multiple analysis results of multiple aspects of the obtained software component (3) and/or configuration component (4) into a score value; and
• determining (164) whether the obtained software component (3)and/or configuration component (4) is of integrity based at least in part on this score value.

10. The method (100) of any one of claims 1 to 9, wherein the analyzing (150) of the obtained software component (3) and/or configuration component (4) comprises:
• uploading (155) the software component (3) and/or configuration component (4) to a digital twin (2*) of the second computing system (2) in a simulation environment; and
• analyzing (156) the behaviour of this digital twin (2*) in the simulation environment.

11. The method (100) of any one of claims 1 to 10, wherein the analyzing (150) of the obtained software component (3) and/or configuration component (4) comprises (157):
• a malware scan and/or a behavioural analysis of the obtained software component (3), and/or
• a scan of the obtained configuration component (4) for the presence of one or more misconfigurations out of a known set of misconfigurations; and/or
• a rating of the obtained software component (3) and/or configuration component (4) by at least one trained machine learning model.

12. The method (100) of any one of claims 1 to 11, wherein the determining (160) whether the obtained software component and/or configuration component is of integrity comprises:
• providing (165) one or more results (150a) of the analysis (150) of the obtained software component (3) and/or configuration component (4) to a human expert (6); and
• prompting (166) the human expert (6) for a rating (6a) that is indicative of whether the obtained software component (3) and/or configuration component (4) is of integrity.

13. The method (100) of any one of claims 1 to 12, further comprising: in response to determining that the obtained software component (3) and/or configuration component (4) is of integrity, storing (170) the compressed digest (3a, 4a) of this software component (3) and/or configuration component (4) received from the second computing system (2) as a new known-good value (5*).

14. A computer program, comprising machine-readable instructions that, when executed on one or more computers and/or compute instances, cause the one or more computers and/or compute instances to perform the method (100) of any one of claims 1 to 13.

15. A non-transitory machine-readable data carrier and/or a download product with the computer program of claim 14.

16. One or more computers and/or compute instances with the computer program of claim 14, and/or with the machine-readable data carrier and/or download product of claim 15.
